# EUROPÄISCHE PATENTANMELDUNG

(11) **EP 2 072 482 A1**
(43) Veröffentlichungstag der Anmeldung: **24.06.2009**
(21) Anmeldenummer: 07123325.8
(22) Anmeldetag: 17.12.2007
(51) Int. Cl.: C04B 35/043, C04B 35/634, C04B 35/66

(54) **Gemenge und daraus hergestellte feuerfeste Formkörper oder Massen mit hoher Hydratationsbeständigkeit**

(71) Anmelder: Evonik Degussa GmbH, 45128 Essen (DE); Techische Universität Bergakademie Freiberg Institut für Keramik, Glas- und Baustofftechnik, 09596 Freiberg (DE)
(72) Erfinder: Aneziris, Christos G., 09599 Freiberg (DE); Klippel, Uwe, 09600 Niederschöna (DE); Tontrup, Christoph, 63755 Alzenau (DE)

(57) **Zusammenfassung**

Gemenge **dadurch gekennzeichnet, dass** es
a) ein oder mehrere feinstkörnige Siliciumdioxidpulver mit einem mittleren Partikeldurchmesser von 2 bis 100 nm mit einer BET-Oberfläche von mindestens 30 m²/g
b) ein oder mehrere körnige Komponenten ausgewählt aus der Gruppe bestehend aus Oxiden, Carbiden und Nitriden, jeweils mit einem mittleren Partikeldurchmesser von >0,5 µm bis 30 mm
c) ein oder mehrere kohlenstoffhaltige Bindemittel und/oder Kohlenstoff und
d) ein oder mehrere Antioxidantien mit einem mittleren Partikeldurchmesser von >0,5 bis 250 µm
enthält.

## Beschreibung

Die Erfindung betrifft ein Gemenge, ein Verfahren zur Herstellung von keramischen oder feuerfesten Formkörpern oder Massen mittels dieses Gemenges, sowie die Formkörper und Massen selbst.

Kohlenstoffgebundene, feuerfeste Erzeugnisse finden einen breiten Einsatz als Auskleidung in metallurgischen Gefäßen, wie beispielsweise als kohlenstoffgebundene Magnesiasteine im Konverter, oder als Schlüsselbauteile, wie beispielsweise Tauchausgüsse oder Schieberplatten oder Stopfen oder Gießrinnen im Stranggussbereich.

Kohlenstoffgebundene, feuerfeste Erzeugnisse werden weiterhin im Hochofenbereich, in Transportgefäßen, wie z.B. Pfannen, oder in der chemischen Industrie oder in der Müllverbrennungsindustrie als temperaturfeste Rohre, oder in der Zementindustrie als Auskleidungsmaterial eingesetzt.

Keramische, kohlenstoffgebundene Membranen oder keramische, kohlenstoffgebundene Hitzeschilder sind weitere Beispiele solcher Komponenten.

Durch Zusätze so genannter Antioxidantien, beispielsweise Metallpulver, boridische Pulver oder nitridische Pulver, gelingt es die Oxidations- und Thermoschockeigenschaften von Feuerfesterzeugnissen zu verbessern. Dies wird durch die Reaktion der Antioxidantien mit einem Bindemittel, Ruß oder Graphit unter Bildung faserartiger Metallkarbide erklärt.

In DE-A-102005051953 wird zusätzlich feinstkörniges Titandioxid eingesetzt, wodurch die Eigenschaften nochmals verbessert werden können.

Im Stand der Technik ist jedoch nicht bekannt, wie die Hydratationsbeständigkeit feuerfester Erzeugnisse verbessert werden kann.

Der Erfindung lag daher die Aufgabe zugrunde, die Hydratation kohlenstoffgebundener, feuerfester Erzeugnisse zu minimieren.

Gegenstand der Erfindung ist ein Gemenge welches
a) ein oder mehrere feinstkörnige Siliciumdioxidpulver mit einem mittleren Partikeldurchmesser von 2 bis 100 nm mit einer BET-Oberfläche von mindestens 30 m²/g
b) ein oder mehrere körnige Komponenten ausgewählt aus der Gruppe bestehend aus Oxiden, Carbiden und Nitriden, jeweils mit einem mittleren Partikeldurchmesser von >0,5 µm bis 30 mm
c) ein oder mehrere kohlenstoffhaltige Bindemittel und/oder Kohlenstoff und
d) ein oder mehrere Antioxidantien mit einem mittleren Partikeldurchmesser von >0,5 bis 250 µm
enthält.

Das im erfindungsgemäßen Gemenge vorliegende Gemenge feinstkörnige Siliciumdioxidpulver kann bevorzugt eine BET-Oberfläche von 30 bis 1000 m²/g, besonders bevorzugt eine von 30 bis 500 und ganz besonders bevorzugt eine von 40 bis 400 m²/g aufweisen. Die Partikel des Pulvers können in aggregierter Form vorliegen oder als isolierte Einzelpartikel vorliegen. Ein einzelner Partikel eines Aggregates wird als Primärpartikel bezeichnet. Der mittlere Partikeldurchmesser bezieht sich auf einen einzelnen Partikel oder aud einen Primäpartikel innerhalb eines Aggregates.

Die Herkunft des Siliciumdioxidpulvers ist nicht kritisch. So können durch Sol-Gel-Verfahren, Fällungsverfahren oder Flammenverfahren erhaltene Siliciumdioxidpulver in dem erfindungsgemäßen Gemenge vorliegen. Es hat sich als vorteilhaft erwiesen, wenn durch Flammenverfahren hergestellte Pulver, sogenannte pyrogene Siliciumdioxidpulver, im Gemenge vorliegen. Die Primärpartikel der pyrogenen Siliciumdioxidpulver weisen als Besonderheit das Fehlen von Poren auf. Pyrogene Siliciumdioxide zeichnen sich durch eine hohe Reinheit aus.

Es ist weiterhin möglich, dass das Siliciumdioxidpulver ein Gemisch von Pulvern ist, die verschiedener Herkunft sind, verschiedener BET-Oberflächen und/oder verschiedene Partikelgrößen aufweisen.

Das feinstkörnige Siliciumdioxidpulver kann dabei auch in oberflächenmodifizierter Form vorliegen. So kann die Oberfläche beispielsweise mit Halogenorganosilanen, Alkoxysilanen, Silazanen, Siloxanen oder Polysiloxanen oberflächenmodifiziert sein. Bevorzugt kann das Silanisierungsmittel Trimethoxyoctylsilan [(CH₃O)₃-Si-C₈H₁₇], Octamethylcyclotetrasiloxan oder Hexamethyldisilazan sein.

Das feinstkörnige Siliciumdioxidpulver kann auch in Form einer Dispersion eingesetzt werden. Diese kann wässrig oder organisch sein. Organisch umfasst dabei zum Beispiel Alkohole und Diole, sowie das kohlenstoffhaltige Bindemittel. Der Siliciumdioxidgehalt der Dispersionen sollte möglichst hoch sein. Bevorzugt sollte er mindestens 15 Gew.-%, bezogen auf die Dispersion, sein. Idealerweise sollte die Dispersion über einen längeren Zeitraum stabil gegen Gelierung und Sedimentation sein. Dies kann beispielsweise durch Zugabe von Additiven erreicht werden.

Der Anteil des feinstkörnigen Siliciumdioxidpulvers im erfindungsgemäßen Gemenge hängt unter anderem von der Art der körnigen Komponente, des kohlenstoffhaltigen Bindemittels und des Antioxidans ab und deren Anteilen ab. In der Regel beträgt der Anteil des feinstkörnigen Siliciumdioxidpulvers 0,01 bis 5 Massenprozent, vorzugsweise 0,1 bis 1 Massenprozent, jeweils bezogen auf die körnige Komponente des Gemenges ist.

Eine körnige oxidische Komponente des Gemenges kann bevorzugt aus der Gruppe, bestehend aus Magnesiumoxid, Calciumoxid, Dolomit, Aluminiumoxid, Yttriumoxid, Zirkondioxid, Zirkonmullit, Magnesiumaluminiumspinell, Bauxit, physikalischen Mischungen der vorgenannten Stoffe und chemischen Mischungen der vorgenannten Stoffe, ausgewählt sein.

Eine besonders bevorzugte körnige, oxidische Komponente ist Magnesiumoxid.

Daneben kann die körnige Komponente auch aus der Gruppe, bestehend aus Siliciumcarbid, Siliciumnitrid, Bornitrid und Mischungen der vorgenannten Stoffe, ausgewählt sein.

Ein weiterer wesentlicher Bestandteil des Gemenges ist ein kohlenstoffhaltiges Bindemittel und/oder Kohlenstoff. Das kohlenstoffhaltige Bindemittel kann bevorzugt aus der Gruppe, bestehend aus Kunstharzen, vorzugsweise Phenolharze, Novolake oder Resole, Kunstpech, Pech, Bitumen und Mischungen davon, ausgewählt sein. Als Kohlenstoff kommt in der Regel Ruß oder Graphit in Frage.

Die Summe der Anteile des kohlenstoffhaltigen Bindemittels und des Kohlenstoffes beträgt vorzugsweise 0,5 bis 20 Massenprozent, bezogen auf die körnige Komponente des Gemenges. Besonders bevorzugt kann ein Anteil von 1 bis 5 Massenprozent, bezogen auf die körnige Komponente des Gemenges, sein.

Weiterhin enthält das erfindungsgemäße Gemenge ein oder mehrere Antioxidantien. Diese sind vorzugsweise Pulver, ausgewählt aus der Gruppe bestehend aus Aluminium, Aluminiumnitrid, Borcarbid, Bornitrid, Eisen, Magnesium, Silicium, Siliciumcarbid, Titan und Titancarbid.

Der Anteil des Antioxidans im erfindungsgemäßen Gemenge kann vorzugsweise 0,5 bis 5 Massenprozent, bezogen auf die körnige Komponente des Gemenges, sein.

Darüber hinaus kann das erfindungsgemäße Gemenge noch wenigstens einen weiteren Bestandteil ausgewählt aus der Gruppe bestehend aus Titandioxid, Ilmenit, FeTiO₃, CaTiO₃, MgTiO₃ und BaTiO₃ enthalten. Der Anteil dieser Bestandteile beträgt in Summe bevorzugt 0,01 bis 5, und besonders bevorzugt 0,1 bis 1 Massenprozent, jeweils bezogen auf die körnige Komponente des Gemenges. Der Partikeldurchmesser dieser Bestandteile beträgt bevorzugt 2 nm bis 5 µm. Dieses Gemenge zeichnet sich dadurch aus, dass feuerfeste Körper mit hoher Hydratations- und Oxidationsbeständigkeit erhalten werden können.

Besonders bevorzugt kann ein Gemenge sein, welches als
- feinstkörnige Komponente 0,1 bis 2 Massenprozent eines pyrogenen Siliciumdioxidpulvers mit einem mittleren Partikeldurchmesser von 7 bis 50 nm und einer BET-Oberfläche von 40 bis 400 m²/g und
- körnige Komponente Magnesiumoxid mit einem mittleren Partikeldurchmesser von 1 µm bis 10 mm
- kohlenstoffhaltiges Bindemittel 1 bis 5 Massenprozent eines Phenolharzes, eines Novolakes oder eines Resoles und
- ein Antioxidans, vorzugsweise Aluminium, mit einem mittleren Partikeldurchmesser von 1 bis 100 µm und
- gegebenenfalls 0,1 bis 1 Massenprozent pyrogenes Titandioxid mit einer BET-Oberfläche von 40 bis 100 m²/g enthält,
- wobei sich die Prozentangaben jeweils auf die körnige Komponente des Gemenges beziehen.

Ein weiterer Gegenstand der Erfindung ist ein Verfahren zur Herstellung eines Formkörpers, bei dem man zu dem erfindungsgemäßen Gemenge, mit der Maßgabe dass dieses wenigstens ein kohlenstoffhaltiges Bindemittel enthält, welches als solches oder in Gegenwart von Härtern thermisch härtbar ist, gegebenenfalls wenigstens einen Härter hinzufügt, das Gemisch in eine Form gibt, gegebenenfalls presst und auf eine Temperatur erhitzt, bei der das kohlenstoffhaltige Bindemittel thermisch vernetzt.

Vorzugsweise kann als kohlenstoffhaltiges Bindemittel Phenolharz, welches mit einem Härter nachgehärtet wird eingesetzt werden. Gut geeignet können auch Novolake in Gegenwart von Formaldehyd oder Formaldehyd abspaltender Verbindungen, beispielsweise Hexamethylentetramin, sein.

Ein weiterer Gegenstand der Erfindung ist ein Verfahren zur Herstellung eines Formkörpers, bei dem man zu dem erfindungsgemäßen Gemenge, mit der Maßgabe dass dieses wenigstens ein kohlenstoffhaltiges Bindemittel ausgewählt aus der Gruppe bestehend aus Kunstpech, Pech, Bitumen und Mischungen davon, enthält, das Gemenge in eine Form gibt, gegebenenfalls presst und auf eine Temperatur oberhalb der Erweichungstemperatur des kohlenstoffhaltigen Bindemittels erhitzt und nachfolgend abkühlen lässt.

Ein weiterer Gegenstand der Erfindung ist ein nach den erfindungsgemäßen Verfahren erhältlicher Formkörper. Dieser zeichnet sich dadurch aus, dass er bei Lagerung über mehrere Wochen und Monate, in denen er Wasser aus der Umgebung aufnehmen konnnte, bei einem nachfolgendem Erhitzen in der Anwendung keine Abplatzungen zeigt, wie sie beispielsweise bei Formkörpern nach dem Stand den Technik, die kein feinstkörniges Siliciumdioxid enthalten, auftreten.

Ein weiterer Gegenstand der Erfindung ist ein Verfahren zur Herstellung keramischer oder feuerfester Formkörper oder keramischer oder feuerfester Massen, bei dem man
- das erfindungsgemäße Gemenge, gegebenenfalls geformt und/oder gepresst, oder
- den erfindungsgemäßen Formkörper
jeweils bei einer Temperatur von 750 bis 1500°C verkokt.

Unter feuerfest ist zu verstehen, dass eine Keramik oder Masse einen Erweichungspunkt von mehr als 1500°C aufweist.

Ein weiterer Gegenstand der Erfindung ist ein keramischer oder feuerfester Formkörper oder eine keramische oder feuerfeste Masse, die gemäß des erfindungsgemäßen Verfahrenes erhältlich ist.

Der Formkörper zeichnet sich durch seine hohe Hydratationsbeständigkeit aus. Auch nach mehreren Wochen und Monaten sind keine Abplatzungen, wie sie beispielsweise bei Formkörpern nach dem Stand den Technik, die kein feinstkörniges Siliciumdioxid enthalten, auftreten.

Ein weiterer Gegenstand der Erfindung ist die Verwendung der erfindungsgemäßen Formkörper zur Herstellung von Schieberplatten, Tauchausgüssen, Steinen, Stopfen, Spülkegeln, Schattenrohren, Auslaufdüsen, Membranen, Wärmedämmstoffen, Hitzeschildern und Graphitelektroden.

### Beispiele

### MgO-C-Konvertersteine

Als körnige Komponente wird kommerziell erhältliches, hochreines Schmelzmagnesia mit einer Kornrohdichte von 3,52 g/cm3 und einer Reinheit von 97 Massenprozente (Possehl, Deutschland) in vier Kornfraktionen eingesetzt, die für eine optimale Packungsdichte ausgelegt sind.

Als Kohlenstoff wird Naturgraphit (Graphit Kropfmühl, Deutschland) eingesetzt. Der Graphit enthält 94 Massenprozente Kohlenstoff, besitzt eine spezifische Oberfläche von 1 m²/g und einen d₅₀ Wert von 0,2 mm.

Als kohlenstoffhaltige Bindemittel dienen Novolakharz (Hexion Specialty Chemicals, Deutschland) zusammen mit dem steinkohleteerpechstämmigen Carbores®P (Rütgers, Deutschland). Als Härter für das Novolakharz wird Hexamethylentetramin verwendet.

Als Antioxidans wird Aluminiumgrieß (TLS Technik, Deutschland) mit einem d90 < 75µm verwendet.

Als feinstkörniges Metalloxid wird Produkt AEROSIL® OX50, Evonik Degussa GmbH, eingesetzt.

Weiterhin wird AERODISP® G 1220, Evonik Degussa GmbH, eine Dispersionen auf Basis von Ethylenglykol mit einem Anteil an Siliciumdioxid von 20 Gew.-% eingesetzt.

Als Vergleich dient gröberes Mikrosilica - RW-Füller.

Tabelle 1 zeigt den Grundversatz, wobei sich die Bindergehalte auf die Gesamtheit aus Magnesiakörnung und Graphit beziehen.

Tabelle 2 gibt einen Überblick über die untersuchten Versätze. Die Homogenisierung erfolgte in einem Eirich-Labormischer.

Die Formgebung erfolgt mittels einer uniaxialen Presse mit fliegendem Mantel. Der Maximalpressdruck von 150 MPa wird mit zwei Vorverdichtungs- und Entlastungsphasen bei ca. 80 MPa gekoppelt. Die Verkokung findet bei 1000°C in reduzierender Atmosphäre (Koksschüttung) statt. Die Aufheizrate beträgt 1,5 K/min und die Haltezeit 300 min.

Nach dem Verkoken weisen alle Versätze ähnliche mechanische und thermische Eigenschaften, eine Kaltdruckfestigkeit von ca. 40 MPa, 45 MPa für D, und eine Heißbiegefestigkeit bei 1400°C von ca. 10 MPa, auf.

Nach ca. 24 Stunden zeigt die Probe "Ref." Abplatzungen und Bildung von Makrorissen, bedingt durch eine Volumenzunahme im Prozentbereich.

Nach ca. 48 Stunden treten bei den Proben B und C die gleichen Erscheinungen auf, während die erfindungsgemäßen Versätze A und D auch über einen Zeitraum von 6 Monaten keine nennenswerte Volumenzunahme oder Rissbildungen zeigen.

**Tabelle 1: Grundversatz**

| | Massenprozent |
|---|---|
| MgO [2-4 mm] | 20,5 |
| MgO [1-2 mm] | 32,5 |
| MgO [0-1 mm] | 22,0 |
| MgO [<63 µm] | 13,0 |
| Graphit (NFL) | 12,0 |
| | 100,0 |
| Novolak 9950FL | 2,2 |
| Härter | 0,2 |
| Carbores®P | 1,0 |
| | |
| Al | 2,2 |

**Tabelle 2: Versätze**

| **Versätze** | **Massenprozent** | **Ref_{.}^{$}** | **A^{&}** | **B^{$}** | **C^{$}** | **D^{&}** |
|---|---|---|---|---|---|---|
| AEROSIL® OX50 | 0,4 | - | X | - | - | - |
| RW Füller | 0,4 | - | - | X | - | - |
| RW Füller | 2,0 | - | - | - | X | - |
| AERODISP® G 1220 | 0,4^{#} | - | - | - | - | X |
| Aluminium | 2,2 | X | X | X | X | - |

| | | | | | | |
|---|---|---|---|---|---|---|
| ^{$}: Vergleich; ^{&} gemäß Erfindung; ^{#} bezogen auf Feststoff X | | | | | | |

## Patentansprüche

1. Gemenge **dadurch gekennzeichnet, dass** es
a) ein oder mehrere feinstkörnige Siliciumdioxidpulver mit einem mittleren Partikeldurchmesser von 2 bis 100 nm mit einer BET-Oberfläche von mindestens 30 m²/g
b) ein oder mehrere körnige Komponenten ausgewählt aus der Gruppe bestehend aus Oxiden, Carbiden und Nitriden, jeweils mit einem mittleren Partikeldurchmesser von >0,5 µm bis 30 mm
c) ein oder mehrere kohlenstoffhaltige Bindemittel und/oder Kohlenstoff und
d) ein oder mehrere Antioxidantien mit einem mittleren Partikeldurchmesser von >0,5 bis 250 µm
enthält.

2. Gemenge nach Anspruch 1, **dadurch gekennzeichnet, dass** die BET-Oberfläche des feinstkörnigen Siliciumdioxidpulvers 30 bis 1000 m²/g, ist.

3. Gemenge nach den Ansprüchen 1 oder 2, **dadurch gekennzeichnet, dass** das feinstkörnige Siliciumdioxidpulver in oberflächenmodifizierter Form vorliegt.

4. Gemenge nach den Ansprüchen 1 bis 3, **dadurch gekennzeichnet, dass** das feinstkörnige Siliciumdioxidpulver in Form einer Dispersion vorliegt.

5. Gemenge nach den Ansprüchen 1 bis 4, **dadurch gekennzeichnet, dass** der Anteil des feinstkörnigen Siliciumdioxidpulvers 0,01 bis 5 Massenprozent, bezogen auf die körnige Komponente des Gemenges ist.

6. Gemenge nach den Ansprüchen 1 bis 5, **dadurch gekennzeichnet, dass** die körnige Komponente aus der Gruppe bestehend aus Magnesiumoxid, Calciumoxid, Dolomit, Aluminiumoxid, Yttriumoxid, Zirkondioxid, Zirkonmullit, Magnesiumaluminiumspinell, Bauxit, physikalischen Mischungen der vorgenannten Stoffe und chemischen Mischungen der vorgenannten Stoffe ausgewählt ist.

7. Gemenge nach den Ansprüchen 1 bis 6, **dadurch gekennzeichnet, dass** die körnige Komponente Magnesiumoxid ist.

8. Gemenge nach den Ansprüchen 1 bis 7, **dadurch gekennzeichnet, dass** die körnige Komponente aus der Gruppe bestehend aus Siliciumcarbid, Siliciumnitrid, Bornitrid und Mischungen der vorgenannten Stoffe ausgewählt ist.

9. Gemenge nach den Ansprüchen 1 bis 8, **dadurch gekennzeichnet, dass** das kohlenstoffhaltige Bindemittel aus der Gruppe bestehend aus Kunstharzen, Kunstpech, Pech, Bitumen und Mischungen davon ausgewählt ist.

10. Gemenge nach den Ansprüchen 1 bis 9, **dadurch gekennzeichnet, dass** die Summe der Anteile des kohlenstoffhaltigen Bindemittels und des Kohlenstoffes 0,5 bis 20 Massenprozent, bezogen auf die körnige Komponente des Gemenges, ist.

11. Gemenge nach den Ansprüchen 1 bis 10, **dadurch gekennzeichnet, dass** die Antioxidantien Pulver ausgewählt aus der Gruppe bestehend aus Aluminium, Aluminiumnitrid, Borcarbid, Bornitrid, Eisen, Magnesium, Silicium, Siliciumcarbid, Titan und Titancarbid sind.

12. Gemenge nach den Ansprüchen 1 bis 11, **dadurch gekennzeichnet, dass** der Anteil des Antioxidans 0,5 bis 5 Massenprozent bezogen auf die körnige Komponente des Gemenges ist.

13. Gemenge nach den Ansprüchen 1 bis 12, **dadurch gekennzeichnet, dass** es wenigstens einen weiteren Bestandteil ausgewählt aus der Gruppe bestehend aus Titandioxid, Ilmenit, FeTiO₃, CaTiO₃, MgTiO₃ und BaTiO₃ enthält.

14. Gemenge nach Anspruch 1, **dadurch gekennzeichnet, dass** es als
- feinstkörnige Komponente 0,1 bis 2 Massenprozent eines pyrogenen Siliciumdioxidpulvers mit einem mittleren Partikeldurchmesser von 7 bis 50 nm und einer BET-Oberfläche von 40 bis 400 m²/g und
- körnige Komponente Magnesiumoxid mit einem mittleren Partikeldurchmesser von 1 µm bis 10 mm
- kohlenstoffhaltiges Bindemittel 1 bis 5 Massenprozent eines Phenolharzes, eines Novolakes oder eines Resoles und
- einem Antioxidans mit einem mittleren Partikeldurchmesser von 1 bis 100 µm enthält,
- wobei sich die Prozentangaben jeweils auf die körnige Komponente des Gemenges beziehen.

15. Gemenge nach Anspruch 14, **dadurch gekennzeichnet, dass** es zusätzlich 0,1 bis 1 Massenprozent pyrogenes Titandioxid mit einer BET-Oberfläche von 40 bis 100 m²/g enthält.

16. Verfahren zur Herstellung eines Formkörpers, **dadurch gekennzeichnet dass** man zu dem Gemenge gemäß der Ansprüche 1 bis 15, mit der Maßgabe dass dieses wenigstens ein kohlenstoffhaltiges Bindemittel enthält, welches als solches oder in Gegenwart von Härtern thermisch härtbar ist, gegebenenfalls wenigstens einen Härter hinzufügt, das Gemisch in eine Form gibt, gegebenenfalls presst und auf eine Temperatur erhitzt, bei der das kohlenstoffhaltige Bindemittel thermisch vernetzt.

17. Verfahren zur Herstellung eines Formkörpers, **dadurch gekennzeichnet dass** man zu dem Gemenge gemäß der Ansprüche 1 bis 15, mit der Maßgabe dass dieses wenigstens ein kohlenstoffhaltiges Bindemittel ausgewählt aus der Gruppe bestehend aus Kunstpech, Pech, Bitumen und Mischungen davon, enthält, das Gemenge in eine Form gibt, gegebenenfalls presst und auf eine Temperatur oberhalb der Erweichungstemperatur des kohlenstoffhaltigen Bindemittels erhitzt und nachfolgend abkühlen lässt.

18. Formkörper erhältlich nach den Verfahren gemäß der Ansprüche 16 oder 17.

19. Verfahren zur Herstellung keramischer oder feuerfester Formkörper oder keramischer oder feuerfester Massen, **dadurch gekennzeichnet, dass** man
- das Gemenge gemäß der Ansprüche 1 bis 15, gegebenenfalls geformt und/oder gepresst, oder
- der Formkörper gemäß des Anspruches 18
jeweils bei einer Temperatur von 750 bis 1500°C verkokt.

20. Keramischer oder feuerfester Formkörper oder keramische oder feuerfeste Masse erhältlich nach dem Verfahren gemäß Anspruch 19.

21. Verwendung der Formkörper gemäß der Ansprüche 18 oder 20 zur Herstellung von Schieberplatten, Tauchausgüssen, Steinen, Stopfen, Spülkegeln, Schattenrohren, Auslaufdüsen, Membranen, Wärmedämmstoffen, Hitzeschildern und Graphitelektroden.
